Europäisches Patentamt

European Patent Office

Office européen des brevets

(19)

(11) Numéro de publication : **0 108 689 B1**

(12)

# FASCICULE DE BREVET EUROPÉEN

(45) Date de publication du fascicule du brevet :
**30.07.86**

(21) Numéro de dépôt : **83402122.2**

(22) Date de dépôt : **28.10.83**

(51) Int. Cl.⁴ : **G 09 B 29/10, H 04 N 5/262**

(54) **Dispositif de superposition d'informations synthétiques sur des informations cartographiques.**

(30) Priorité : **09.11.82 FR 8218802**

(43) Date de publication de la demande :
**16.05.84 Bulletin 84/20**

(45) Mention de la délivrance du brevet :
**30.07.86 Bulletin 86/31**

(84) Etats contractants désignés :
**DE GB IT NL**

(56) Documents cités :
**GB-A- 1 178 330**
**N.H.K. LABORATORIES NOTE, no. 264, septembre
1981, pages 1-9, NHK, Tokyo, JP T. NISHIZAWA et al.:
"Experimental component coding system"**

(73) Titulaire : **THOMSON-CSF**
**173, Boulevard Haussmann**
**F-75379 Paris Cedex 08 (FR)**

(72) Inventeur : **Lavigne, Bernard**
**THOMSON-CSF SCPI 173, bld Haussmann**
**F-75379 Paris Cedex 08 (FR)**
Inventeur : **Bugnard, Jean-Pierre**
**THOMSON-CSF SCPI 173, bld Haussmann**
**F-75379 Paris Cedex 08 (FR)**
Inventeur : **Chagny, Christian**
**THOMSON-CSF SCPI 173, bld Haussmann**
**F-75379 Paris Cedex 08 (FR)**

(74) Mandataire : **Benoit, Monique**
**THOMSON-CSF SCPI 19, avenue de Messine**
**F-75008 Paris (FR)**

EP 0 108 689 B1

## Description

L'invention concerne un dispositif de superposition d'informations synthétiques sur des informations cartographiques, destiné à faire apparaître sur des cartes géographiques d'une région des informations provenant d'un centre de traitement et relatives à l'exploration de cette région.

Une application particulière concerne les systèmes d'exploitation des données radar.

En effet, un problème se pose très souvent dans les systèmes d'exploitation des signaux et notamment dans les systèmes d'exploitation d'informations radar lorsqu'il s'agit de faire apparaître sur des cartes géographiques et avec une bonne précision des informations relatives à des positions de véhicules sur un terrain ou de localisation de bateaux par rapport à des côtes ou à des fonds marins.

Deux solutions classiques connues dans l'art permettent de résoudre partiellement ces problèmes.

La première solution consiste à projeter sur un écran les informations synthétiques et à superposer une carte géographique de la région. Il est évident que la résolution des images synthétiques n'est pas d'une très bonne qualité dans cette application qui nécessite une très grande précision, car les dispositifs de projection optiques ne donnent jamais une définition très fine des images.

La deuxième solution consiste à projeter des cartes géographiques se présentant sous forme de diapositives ou de films cinématographiques sur des informations synthétiques apparaissant sur un tube cathodique à fenêtre arrière ou sur un panneau à plasma. La fenêtre arrière permet de projeter les diapositives ou le film. La solution du tube cathodique à fenêtre arrière présente au moins trois inconvénients. Le premier inconvénient résulte de la forme concave du tube qui introduit une légère distorsion des images et par conséquent des imprécisions dans la superposition des informations. Le deuxième inconvénient provient du fait que la projection de diapositives ou de films par une fenêtre arrière nécessite un éclairage de cette fenêtre. Cet éclairage provoque un éclairage superflu au niveau de l'écran et nuit au contraste des images apparaissant sur l'écran. La solution de l'écran à plasma donne de meilleurs résultats car il n'y a pas de problèmes de distorsion ni de contraste des images mais la résolution des images n'est pas satisfaisante, de plus l'image synthétique reste sommaire sans niveau de gris ni de couleurs. Le troisième inconvénient réside dans la superposition entre l'image graphique et l'image cartographique, qui sont visualisées par des dispositifs différents et dont il faut ajuster périodiquement le grandissement et le cadrage.

A tous ces inconvénients s'ajoute un problème de stockage des cartes géographiques, des diapositives et des films.

Pour remédier à ces inconvénients la présente invention propose un dispositif de superposition d'informations synthétiques sur des informations cartographiques du type cartes géographiques consistant d'une part à filmer ces cartes à l'aide d'une caméra de prise de vues couleur ligne par ligne, à numériser le signal vidéo-couleur obtenu et à enregistrer ce signal numérique sur un support tel que disque optique numérique ou disque magnétique ou bande magnétique et d'autre part à transformer les informations synthétiques en signal vidéo et à superposer ce signal au signal vidéo restitué à partir du signal numérique enregistré, sur un écran de télévision à l'aide d'un procédé d'incrustation connu en télévision.

La présente invention a donc pour objet un dispositif de superposition d'informations synthétiques sur des informations cartographiques, destiné à faire apparaître sur une carte géographique d'une région délimitant un champ d'observation, des informations relatives à des situations données, provenant de sources diverses observant cette région comprenant un dispositif de prise de vues pour effectuer une analyse point par point et ligne par ligne de la carte géographique relative à la région observée et délivrer un signal vidéo-couleur numérique, caractérisé en ce qu'il comprend :

une unité de traitement et de commande apte à recevoir le signal vidéo-couleur numérique, à traiter ce signal et à le corriger pour améliorer ses caractéristiques et délivrer un signal matricé adapté, et d'autre part à recevoir des informations synthétiques destinées à être placées en des points précis sur la carte et à générer un signal vidéo-couleur à partir de ces informations ;

des moyens d'enregistrement reliés à l'unité de traitement, permettant à l'unité de traitement d'effectuer l'enregistrement du signal matricé adapté, puis de relire cet enregistrement ;

des moyens de restitution aptes d'une part à recevoir le signal matricé adapté transmis par l'unité de commande, à mémoriser ce signal pour le transmettre à un rythme donné, à transformer le signal mémorisé en signal vidéo-couleur et à délivrer le signal vidéo-couleur sur ordre de l'unité de traitement et de commande, et d'autre part à recevoir le signal vidéo-couleur généré portant les informations synthétiques en synchronisme avec le signal vidéo-couleur restitué, pour incruster le signal généré au signal restitué de manière à obtenir un signal vidéo-couleur permettant de visualiser sur un moniteur de télévision haute résolution la carte et les informations synthétiques sur cette carte.

D'autres particularités et avantages de l'invention apparaîtront clairement à la lecture de la description suivante présentée à titre d'exemple non limitatif et faite en regard des figures annexées qui représentent :

figure 1 un schéma synoptique du dispositif conforme à l'invention ;

figure 2 un schéma de réalisation d'un dispositif de prise de vues selon la figure 1 ;

figure 3 un schéma de réalisation d'un dispositif de restitution selon la figure 1 ;

figure 4 un schéma d'un détail de réalisation selon la figure 3.

L'application qui est décrite ci-dessous concerne un système d'exploitation de données radar. Le dispositif de superposition peut s'appliquer à tout autre système d'exploitation nécessitant la superposition d'informations synthétiques provenant donc d'un centre de traitement, à des informations cartographiques du type cartes géographiques.

Les informations synthétiques reçues dans une application radar, peuvent par exemple être la position, la vitesse, la direction d'une cible observée dans une région donnée.

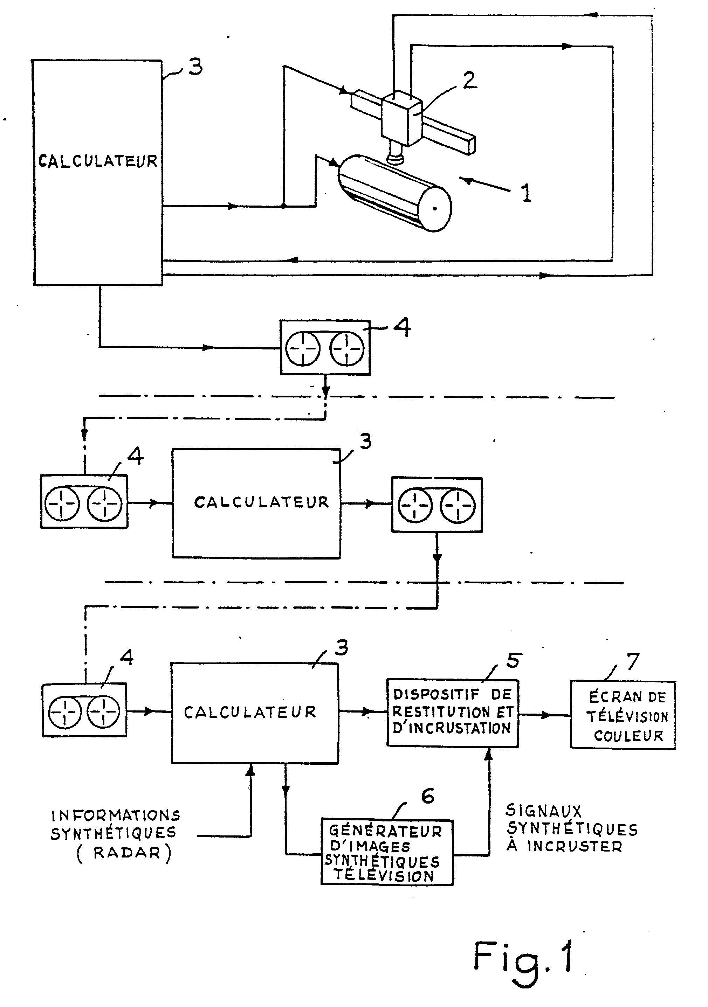

Le synoptique de la figure 1 illustre le dispositif de superposition d'informations dans une version dynamique. Cette version comprend trois phases dans le déroulement du fonctionnement du dispositif selon l'invention.

La première phase consiste à filmer des cartes géographiques à l'aide d'un dispositif de prise de vues 1 comportant une caméra de télévision couleur 2, à numériser le signal vidéo-couleur appelé signal RVB et à effectuer un premier traitement à l'aide d'un calculateur 3 qui corrige point par point des défauts du dispositif de prise de vues 1.

La deuxième phase consiste à effectuer un traitement en temps réel du signal à l'aide du calculateur 3 pour d'une part améliorer les couleurs et d'autre part effectuer un matriçage du signal RVB très classique en télévision dans le but d'obtenir un signal de luminance Y et deux signaux de chrominance S1 et S2.

La deuxième phase consiste d'autre part à enregistrer ce signal sur un support 4 du type bande magnétique ou disque optique numérique.

La troisième phase consiste à lire le signal enregistré sur le support 4 à l'aide d'un calculateur 3 qui reçoit par ailleurs les informations synthétiques en temps réel afin de restituer le signal RVB de la carte numérisée au moyen d'un dispositif de restitution 5 et à générer au moyen d'un générateur 6 un autre signal RVB à partir des informations synthétiques reçues pour incruster ce signal au signal RVB de la carte. Le signal vidéo obtenu permet de visualiser la carte et les informations synthétiques sur un écran de télévision 7. Le calculateur 3 utilisé dans cette phase n'est pas nécessairement le même que dans les phases antérieures et peut par exemple être moins encombrant pour faciliter le transport sur le terrain.

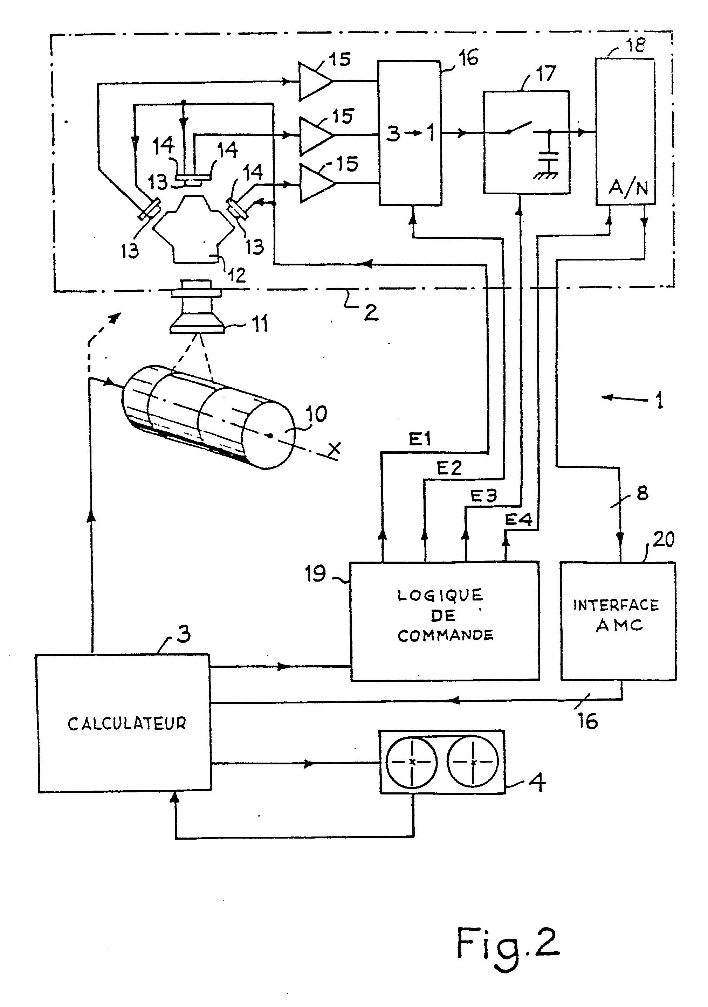

Sur la figure 2 on a représenté le schéma d'un dispositif de prise de vues 1 conforme à l'invention. Une carte géographique est placée sur un support mobile 10. La caméra couleur 2 est placée au-dessus de la carte dont elle permet la prise de vues d'une même ligne et peut se déplacer au-dessus de la carte, de sorte qu'en combinant le mouvement du support 10 et de la caméra 2 on puisse filmer la totalité de la carte. Le champ de visualisation de la caméra 1 étant inférieur à la largeur de la carte, la carte a été préalablement divisée en N bandes de L lignes comportant M points d'analyse, ceci afin d'obtenir la meilleure résolution possible. La caméra explore point par point et ligne par ligne chaque bande. Chaque point d'exploration correspond évidemment à une zone sur la carte dont les dimensions seront d'autant plus faibles que le nombre M sera grand. Le mécanisme d'entraînement du support 10 et de la caméra est apte, à permettre une analyse ligne par ligne de chaque bande.

Dans cette réalisation particulière le support 10 est constitué d'un tambour cylindrique pouvant tourner autour de son axe de symétrie × pour permettre à la caméra qui reste alors fixe d'effectuer l'analyse de toute une bande, et la caméra 2 peut se déplacer suivant cet axe pour effectuer l'analyse de toutes les bandes. L'ensemble des deux supports peut être par exemple réalisé à l'aide d'un traceur à tambour du type BENSON 5342.

La caméra 2 comporte un objectif 11, un séparateur trichromatique 12 et trois barrettes photosensibles intégrées haute résolution 13 du type FAIRCHILD CCD 122 ou THOMSON THX 1143 par exemple et montées sur supports amovibles 14, pour effectuer l'analyse de la carte. Elle comporte également trois amplificateurs vidéo 15 amplifiant respectivement les signaux RVB, un multiplexeur 16 multiplexant les trois signaux, un échantillonneur bloqueur 17 échantillonnant chacun de ces signaux multiplexés et un convertisseur 18 analogique-numérique convertissant les signaux multiplexés en signaux numériques. Ces signaux sont codés numériquement sur n bits, n étant égal à huit dans cette application.

Les mouvements de la caméra 2 et du support 10 sont commandés par le calculateur 3, tandis qu'un circuit logique commande 19 génère des signaux de commande E1, E2, E3, E4, sur ordre du calculateur, permettant d'activer respectivement les barrettes 13, le multiplexeur 16, l'échantillonneur 17 et le convertisseur 18.

Les signaux multiplexés RVB sont transmis à un circuit d'interface 20 qui permet d'adapter le mode de transmission des signaux à la sortie de la caméra au mode de transmission par canal AMC, ce canal permettant de transmettre les données au calculateur 3 sur 16 bits en parallèle.

Le calculateur 3 est un calculateur par exemple du type MITRA 225. Il permet d'une part d'émettre des signaux de commande, et d'autre part d'effectuer dans une première phase les corrections des défauts dus au dispositif de prise de vues.

La première correction consiste à corriger les défauts chromatiques des barrettes 13. La sensibilité des barrettes 13 n'étant pas uniforme sur tout le spectre visible, il est nécessaire d'apporter une correction en affectant des coefficients multiplicatifs à chacune des voies RVB.

La deuxième correction permet de corriger la sensibilité et la non-uniformité de ces barrettes. Ces défauts sont provoqués par des éléments photosensibles défectueux, par un éclairement de la surface explorée non uniforme, et par des effets de bord de l'objectif.

La troisième correction consiste à corriger les défauts géométriques introduits par le séparateur trichromatique 12.

Tout ce traitement de signal réalisé par le calculateur est parfaitement connu dans l'art et présente comme unique intérêt d'améliorer les caractéristiques des signaux RVB. Ces signaux sont ensuite enregistrés sur une bande magnétique 4 par exemple.

Un deuxième traitement est effectué par le calculateur avant la restitution. Le calculateur effectue une lecture de l'enregistrement et modifie des paramètres du signal pour améliorer les couleurs. Il effectue ensuite un matriçage des signaux RVB pour obtenir le signal Y, S1 et S2.

$$Y = \alpha\ R + \beta\ V + \gamma\ B$$
$$S1 = Y - R/2$$
$$S2 = Y - B/2$$

Les paramètres $\alpha$, $\beta$, $\gamma$, adaptés à cette réalisation particulière, sont choisis pour obtenir $Y = 1$ pour la couleur blanche et également pour simplifier les calculs de dématriçage numérique à la restitution, par exemple $\alpha = 0,5$, $\beta = \gamma + 0,25$.

Le matriçage des signaux RVB est une technique connue en télévision et permet de réduire la bande passante du signal vidéo. En effet, comme l'œil est peu sensible à une variation de chrominance sur des détails fins, le codage de chaque signal de chrominance est effectué pour un point sur quatre. Comme on utilise n bits pour coder un point, il faut donc : $n \times M \times L/2$ bits pour coder chaque signal de chrominance et $n \times M \times L$ bits pour coder le signal de luminance.

En plus du matriçage, le débit d'information peut être encore réduit par l'utilisation d'un codage par plage ou d'algorithme équivalent.

A titre d'exemple, la résolution du tube image de la caméra est dans cet exemple de 1 000 × 1 000 (1 000 points, 1 000 lignes), chaque point sur l'écran correspond à un carré de 0,1 × 0,1 mm sur la carte. Le champ de la caméra représente donc une fenêtre de 100 × 100 mm environ.

Pour coder le signal Y on prendra donc 1 024 × 1 024 × 8 bits.

Pour coder le signal S1 on prendra 512 × 512 × 8 bits ainsi que pour coder le signal S2. Le codage du signal vidéo pour une image est donc effectué sur 12 M bits.

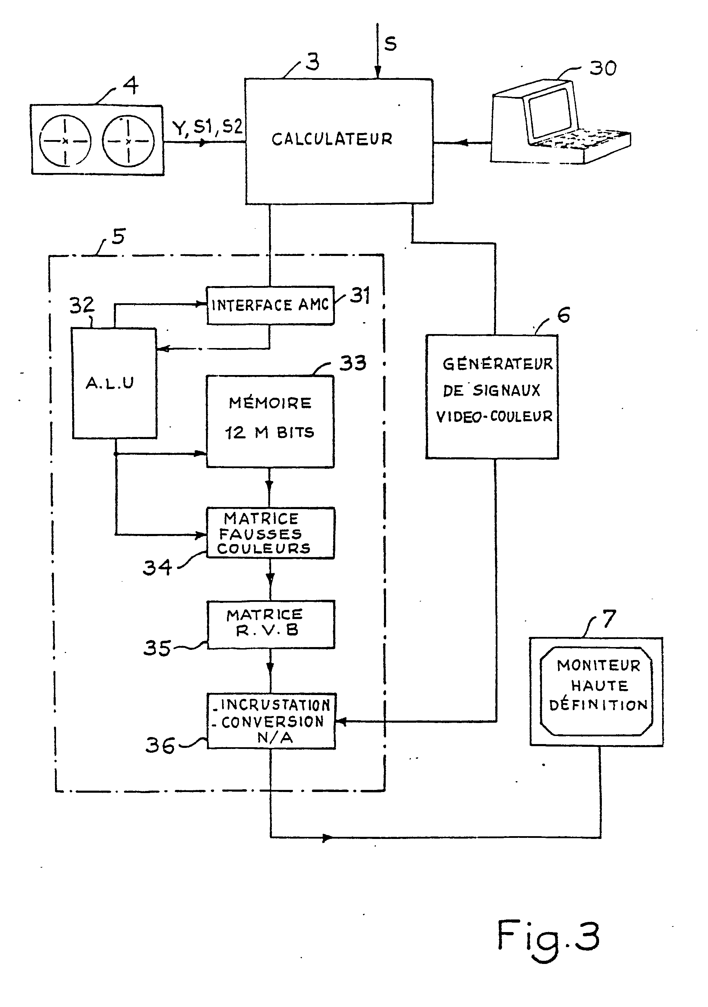

Sur la figure 3, on a représenté un schéma général du dispositif de restitution 5.

Le signal numérisé enregistré sur le support 4 est relu à une vitesse v dépendant de la configuration du support d'enregistrement par le calculateur 3 qui reçoit par ailleurs des informations synthétiques en temps réel, représentées par le signal S. Les fonctions du calculateur 3 étant moins complexes dans cette phase, on peut utiliser un calculateur moins sophistiqué et moins encombrant de type 68 000 de Motorola.

Une console opérateur 30 permet éventuellement d'intervenir pour choisir les images des zones à visualiser et également pour choisir les paramètres des algorithmes de traitement du signal restitué pour modifier le contraste par exemple ou accentuer les couleurs.

Le calculateur 3 transmet les données relatives à l'image de la carte sur un canal AMC au dispositif de restitution 5.

Le dispositif 5 comprend tout d'abord un circuit interface 31 qui effectue la transformation inverse du circuit 20 pour transmettre les données sur n bits en série à une unité arithmétique et logique 32 (A.L.U. en abrégé). L'ALU est un processeur rapide qui gère les adresses de lecture et d'écriture d'une mémoire image 33 de capacité au moins égale à 2 ($n \times M \times L$) bits, soit dans cette réalisation 12 M bits. Par l'intermédiaire du calculateur 3, on effectue un transfert à une vitesse v des données de chaque image enregistrée vers la mémoire RAM 33 et on effectue une lecture des données d'une image à une vitesse V adaptée à la restitution d'images télévisées permettant de restituer 25 ou 30 images par seconde (entrelacées), ou 50 ou 60 images par seconde (non entrelacées).

Une mémoire de transcodage 34 reçoit les données lues dans la mémoire 33 et permet d'améliorer les couleurs et de les adapter à l'écran de visualisation 7. Il est possible, en modifiant le codage de la couleur, de faire ressortir certains détails de la carte par rapport aux autres (routes, courbes de niveau etc...). Les données lues dans cette mémoire 34 sont transférées dans une autre mémoire de transcodage 35 qui permet de transformer les signaux Y, S1, S2 multiplexés qu'elle reçoit, en signaux RVB. La mémoire 35 effectue donc la fonction inverse du matriçage.

Le générateur 6 qui reçoit du calculateur des données asynchrones, génère des signaux RVB qu'il transmet à un dispositif d'incrustation 36. Ce dispositif reçoit par ailleurs les données images lues dans la mémoire 35. Il superpose les signaux RVB et délivre un signal RVB analogique vers le moniteur de télévision couleur haute résolution 7 qui permet de visualiser les différentes zones de la carte enregistrée.

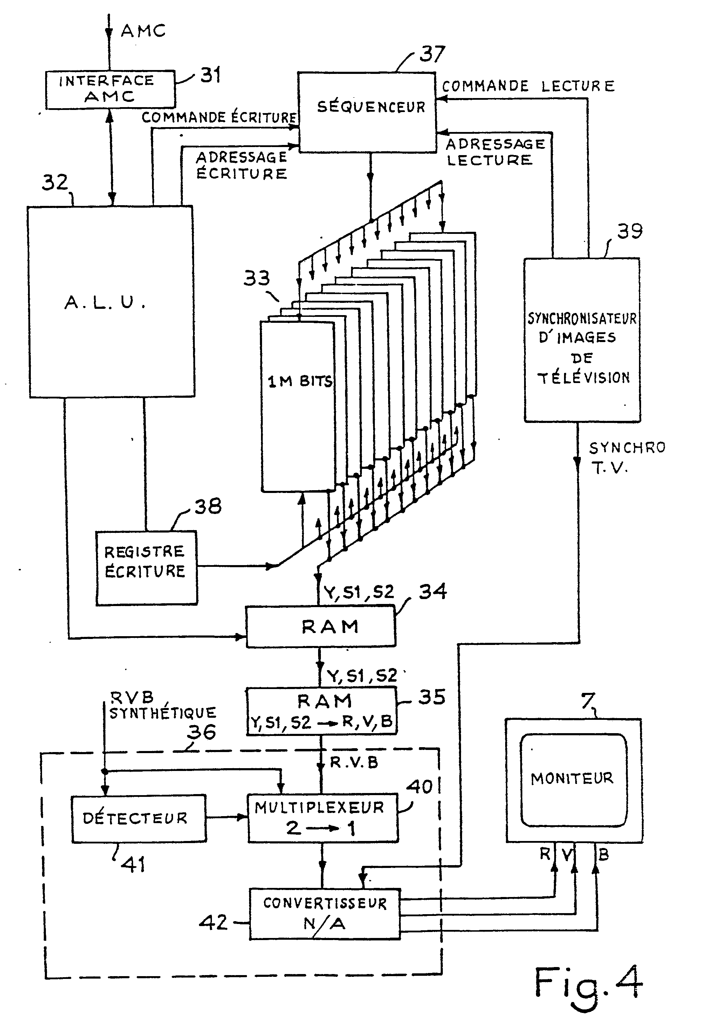

Sur la figure 4 on a représenté un schéma détaillé du dispositif de restitution 5. L'ALU 32 émet un signal de commande d'écriture et des signaux de décodage d'adresse vers un séquenceur 37 qui va activer les commandes d'écriture d'un ensemble de mémoires de 1 M bits chacune, constituant la mémoire 33. Le séquenceur adresse alors ces mémoires et un registre d'écriture 38, transfère les données reçues par l'ALU 32 aux adresses mémoire données par l'intermédiaire du séquenceur 37.

La commande de lecture est émise par un circuit 39 de synchronisation d'image de télévision. Ce circuit 39 va, suivant les signaux de synchronisation de trame et de ligne, commander la lecture des données en mémoire et émettre un signal de décodage d'adresse au séquenceur 37. Les données lues sont transmises à la mémoire 34.

Le dispositif d'incrustation 36 comprend dans cette réalisation un multiplexeur 40 à deux entrées pour recevoir d'une part le signal RVB relatif, à la carte et d'autre part le signal RVB relatif aux données synthétiques. Comme les données synthétiques sont asynchrones, le signal RVB généré n'est pas toujours significatif. Un détecteur 41 détecte la présence du signal lorsque ce signal est significatif. Le détecteur 41 active les entrées de sélection du multiplexeur 40 qui délivre le signal RVB. Le multiplexeur 40 délivre alors le signal RVB relatif aux données synthétiques. Un convertisseur numérique-analogique 42 émet les signaux RVB sur commande du signal de synchronisation de télévision émis par le circuit 39.

Les signaux numériques RVB peuvent évidemment être convertis avant l'incrustation. Dans ce cas on utilisera plutôt un commutateur analogique qui remplira, les mêmes fonctions que le multiplexeur 40.

**Revendications**

1. Dispositif de superposition d'informations synthétiques sur des informations cartographiques, destiné à faire apparaître sur une carte géographique d'une région délimitant un champ d'observation, des informations relatives à des situations données, provenant de sources diverses observant cette région du type comprenant un dispositif de prise de vues pour effectuer une analyse point par point, ligne par ligne de la carte géographique relative à la région observée et délivrer un signal vidéo-couleur numérique, caractérisé en ce qu'il comprend :

une unité de traitement et de commande (3) apte d'une part à recevoir le signal vidéo-couleur numérique, à traiter ce signal et à le corriger pour améliorer ses caractéristiques et délivrer un signal matricé adapté, et d'autre part à recevoir des informations synthétiques destinées à être placées en des points précis sur la carte et à générer un signal vidéo-couleur à partir de ces informations ;

des moyens d'enregistrement (4) reliés à l'unité de traitement (3), permettant à l'unité de traitement d'effectuer l'enregistrement du signal matricé adapté puis de lire cet enregistrement ;

des moyens de restitution (5) aptes d'une part à recevoir le signal matricé adapté transmis par l'unité de traitement et de commande (3), à mémoriser provisoirement ce signal pour le transmettre à un rythme donné, à transformer le signal mémorisé en signal vidéo-couleur et à délivrer le signal vidéo-couleur sur l'ordre de l'unité de traitement et de commande (3), et d'autre part à recevoir le signal vidéo-couleur généré portant les informations synthétiques en synchronisme avec le signal vidéo-couleur restitué, pour incruster le signal généré au signal restitué de manière

à obtenir un signal vidéo-couleur permettant de visualiser sur un moniteur de télévision haute résolution (7), la carte et les informations synthétiques sur cette carte.

2. Dispositif de superposition selon la revendication 1, caractérisé en ce que les moyens de prise de vues (1, 2) comprennent :
une caméra couleur (2) mobile ;
un support de carte (1) mobile, la caméra étant placée au-dessus du support (1), de sorte qu'en combinant le mouvement de la caméra et celui du support de la carte on puisse filmer la totalité de la carte, les mouvements de la caméra et du support étant coordonnés à l'aide de l'unité de traitement et de commande (3).

3. Dispositif de superposition selon la revendication 1, caractérisé en ce que les moyens de restitution comprennent :
une mémoire image (33) à écriture et à lecture ayant une capacité au moins égale à la capacité nécessaire pour mémoriser les données numériques du signal matricé enregistré résultant de l'analyse d'une image par la caméra (2) ;
une unité arithmétique et logique (32) reliée à l'unité de traitement (3) qui lui transmet le signal matricé enregistré, cette unité (32), permettant de gérer les adresses de destination de ces données et de commander l'écriture puis la lecture de ces données à ces adresses dans la mémoire (33) ;
une matrice de fausses couleurs (34) recevant les données lues dans la mémoire image (33) permettant d'effectuer un transcodage pour adapter les paramètres définissant les couleurs aux caractéristiques du moniteur de visualisation (7) et délivrant un signal matricé (Y, S1, S2) adapté ;
une matrice de transcodage (35) recevant le signal matricé (Y, S1, S2) adapté et transformant ce signal en signal vidéo-couleur (R, V, B) relatif à la carte enregistrée ;
des moyens d'incrustation (36) apte à recevoir le signal vidéo-couleur (R, V, B) relatif à la carte enregistrée, à recevoir le signal vidéo-couleur (R, V, B) généré relatif aux données synthétiques et à délivrer alternativement selon que le signal généré est significatif ou non, l'un de ces deux signaux.

4. Dispositif de superposition selon la revendication 3, caractérisé en ce que les moyens de restitution (5) comprennent également :
un synchronisateur (39) générant des signaux de synchronisation d'image de télévision ;
un séquenceur (37) recevant des ordres de commande d'écriture et d'adressage émis par l'unité arithmétique et logique (32) et des ordres de commande de lecture et d'adressage émis par le synchronisateur (39) ;
un registre d'écriture (38) recevant les données transmises par l'unité arithmétique et logique (32), à inscrire dans la mémoire aux adresses indiquées.

5. Dispositif de superposition selon l'une quelconque des revendications 1 à 5, caractérisé en ce que les moyens d'incrustation (36) comprennent :

un multiplexeur (40) recevant le signal vidéo-couleur (R, V, B) relatif à la carte, et le signal vidéo-couleur (R, V, B) relatif aux données synthétiques ;

un détecteur (41) pour recevoir le signal vidéo-couleur (R, V, B) relatif aux données synthétiques, détectant ce signal et activant les entrées de sélection du multiplexeur (40) en fonction de la détection de ce signal ;

un convertisseur (42) pour convertir le signal numérique délivré par le multiplexeur en signal analogique.

6. Dispositif de superposition selon l'une quelconque des revendications 1 à 5, caractérisé en ce que l'unité de traitement et de commande (3) comporte un calculateur (3) combiné à une console opérateur (30) et à un générateur de signaux vidéo-couleur (6).

7. Dispositif de superposition selon l'une quelconque des revendications 1 à 6, caractérisé en ce que le support de carte (1) est constitué d'un tambour cylindrique (1) pouvant tourner autour de son axe de symétrie.

**Claims**

1. A device for the superposition of synthetic informations on cartographic informations, conceived to plot, on a geographic map of a region delimiting an observation field, informations relating to given situations coming from different sources which observe this region, the device being of the type comprising an image pick-up device conceived to analyse point after point and line after line the geographic map relating to the observed region and to deliver a digital video-colour signal, characterized in that it comprises :

a processor and control unit (3) conceived on the one hand to receive the digital video-colour signal, to process this signal and to correct it in order to improve its characteristics and to deliver an adapted matriced signal, and on the other hand to receive synthetic informations intended to be placed at particular points of the map and to generate a video-colour signal on the basis of these informations ;

registration means (4) connected to the processor unit (3) and enabling the processor unit to register the adapted matriced signal and then to read this registered information ;

restitution means (5) conceived on the one hand to receive the adapted matriced signal transmitted by the processor and control unit (3) to temporarily store this signal in memory and to transmit it at a given rhythm, to transform the stored signal into a video-colour signal and to deliver this video-colour signal under control of · the processor and control unit (3), and on the other hand to receive the generated video-colour signal bearing the synthetic informations in synchronism with the restituted video-colour signal, in order to insert the generated signal into the restituted signal and to obtain a video-colour signal which is able to display the map together with the synthetic informations on a high resolution television monitor (7).

2. A superposition device according to claim 1, characterized in that the image pick-up means (1, 2) comprise :

a movable colour camera (2) ;

a movable map support (1), the camera being located above the support (1), so that the entire map can be scanned by combining the movement of the camera and the movement of the map support, the movements of the camera and of the support being coordinated by means of the processor and control unit (3).

3. A superposition device according to claim 1, characterized in that the resolution means comprise :

an image memory (33) having writing and reading facilities and a capacity at least equal to the capacity necessary for storing the digital data of the registered matriced signal resulting from the analysis of an image by the camera (2) ;

an arithmetic and logic unit (32) connected to the processor unit (3) and transmitting thereto the registered matriced signal, this unit (32) being able to manage the destination addresses of these data and to control the writing operation and then the reading operation of these data at these addresses in the memory (33) ;

a false colour matrix (34) which receives the data read from the image memory (33) and performs a transcoding for adapting the parameters defining the colours to the characteristics of the display monitor (7) and delivers an adapted matriced signal (Y, S1, S2) ;

a transcoder matrix (35) receiving the adapted matriced signal (Y, S1, S2) and transforming this signal into a video-colour signal (R, V, B) relating to the registered map ;

insertion means (36) conceived to receive the video-colour signal (R, V, B) relating to the registered map, to receive the generated video-colour signal (R, V, B) relating to the synthetic data and to deliver alternatingly one of these two signals according to whether the generated signal is significant or not.

4. A superposition device according to claim 3, characterized in that the restitution means (5) further comprise :

a synchronisator (39) generating television image synchronisation signals ;

a sequence generator (37) receiving the write and address control orders transmitted by the arithmetic and logic unit (32) and the read and address control orders transmitted by the synchronisator (39) ;

a write register (38) receiving the data transmitted by the arithmetic and logic unit (32) which are to be stored in the memory at the indicated addresses.

5. A superposition device according to any one of claims 1 to 4, characterized in that the insertion means (36) include :

a multiplexer (40) receiving the video-colour signal (R, V, B) relating to the map and the video-colour signal (R, V, B) relating to the synthetic data ;

a detector (41) for receiving the video-colour signal (R, V, B) relating to the synthetic data, this detector detecting this signal and activating the selection inputs of the multiplexer (40) in accordance with the detection of this signal ;

a converter (42) for converting the digital signal delivered by the multiplexer into an analog signal.

6. A superposition device according to any one of claims 1 to 5, characterized in that the processor and control unit (3) comprises a computer combined with an operator keyboard (30) and with a generator of video-colour signals (6).

7. A superposition device according to any one of claims 1 to 6, characterized in that the map support (1) is constituted by a cylindrical drum (1) which is rotatable about its axis of symmetry.

**Patentansprüche**

1. Vorrichtung zur Überlagerung synthetischer Informationen über kartographische Informationen, um auf einer geographischen Karte einer Gegend, die ein Beobachtungsfeld begrenzt, Informationen bezüglich gegebener Situationen sichtbar zu machen, die von verschiedenen, diese Gegend beobachtenden Quellen stammen, mit einer Bildaufzeichnungsvorrichtung, um eine Analyse Punkt für Punkt, Zeile für Zeile der geographischen Karte bezüglich der beobachteten Gegend durchführen und ein digitales Farbbildsignal zu erzeugen, dadurch gekennzeichnet, daß sie enthält :

eine Verarbeitungs- und Steuereinheit (3), die einerseits das digitale Farbbildsignal empfangen, verarbeiten und korrigieren kann, um seine Kennwerte zu verbessern, und ein angepaßtes Matrizensignal liefern kann und andererseits synthetische Informationen empfangen kann, die dazu bestimmt ist, an ganz genauen Punkten der Karte plaziert zu werden, und die ein Farbbildsignal ausgehend von diesen Informationen erzeugen kann ;

Registriermittel (4), die an die Verarbeitungseinheit (3) angeschlossen sind und es der Verarbeitungeinheit ermöglichen, das angepaßte Matrizensignal zu registrieren und dann wieder auszulesen ;

Restitutionsmittel (5), die einerseits das von der Verarbeitungs- und Steuereinheit (3) übertragene angepaßte Matrizensignal empfangen können, dieses Signal vorübergehend speichern können, um es in einem gegebenen Rhythmus zu übertragen, das gespeicherte Signal in ein Farbbildsignal umwandeln können und das Farbbildsignal aufgrund der Steuerung durch die Verarbeitungs- und Steuereinheit (3) ausgeben können, und die andererseits das erzeugte Farbbildsignal, das die synthetischen Informationen trägt, synchron mit dem restituierten Farbbildsignal empfangen können, um das erzeugte Signal in das restituierte Signal einzufügen, so daß sich ein Farbbildsignal ergibt, das es ermöglicht, auf einem hochauflösenden Fernsehmonitor (7) die Karte und die synthetischen Informationen auf dieser Karte sichtbar zu machen.

2. Vorrichtung zur Überlagerung nach Anspruch 1, dadurch gekennzeichnet, daß die Bildaufzeichnungsmittel (1, 2)

eine bewegliche Farbbildkamera (2),

und einen beweglichen Kartenträger (1) enthalten, wobei die Kamera oberhalb des Trägers (1) angeordnet ist, so daß man durch Kombination der Bewegungen der Kamera und des Kartenträgers die ganze Karte filmen kann, wobei die Bewegungen der Kamera und des Trägers mithilfe der Verarbeitungs- und Steuereinheit (3) koordiniert werden.

3. Überlagerungsvorrichtung nach Anspruch 1, dadurch gekennzeichnet, daß die Restitutionsmittel aufweisen :

einen Lese/Schreib-Bildspeicher (33) mit einer Speicherkapazität mindestens gleich derjenigen, die für die Speicherung der digitalen Daten des aus der Analyse eines Bildes durch die Kamera (2) resultierenden gespeicherten Matrizensignals benötigt wird ;

eine arithmetische und logische Einheit (32), die an die Verarbeitungseinheit (3) angeschlossen ist und von ihr das registrierte Matrizensignal übermittelt erhält, wobei diese Einheit (32) die Verwaltung der Zieladressen dieser Daten und die Schreibsteuerung und dann die Lesesteuerung dieser Daten an diesen Adressen im Speicher (33) erlaubt ;

eine Fehlfarbenmatrix (34), die die aus dem Bildspeicher (33) gelesenen Daten zugeführt erhält und eine Transkodierung durchzuführen vermag, um die die Farben definierenden Parameter an die Kennwerte des Monitors (7) anzupassen und ein angepaßtes Matrizensignal (Y, S1, S2) zu liefern ;

eine Transkodiermatrix (35), der das angepaßte Matrizensignal (Y, S1, S2) zugeführt wird und die dieses Signal in ein Farbbildsignal (R, V, B) bezüglich der registrierten Karte umwandelt ;

Einfügungsmittel (36), die das Farbbildsignal (R, V, B) bezüglich der registrierten Karte und das erzeugte Farbbildsignal (R, V, B) betreffend die synthetischen Daten empfangen können und abwechselnd eines der beiden Signale ausgeben können, je nachdem, ob das erzeugte Signal signifikativ ist oder nicht.

4. Überlagerungsvorrichtung nach Anspruch 3, dadurch gekennzeichnet, daß die Restitutionsmittel (5) außerdem enthalten :

eine Synchronisiervorrichtung (39), die Fernsehbildsynchronisationssignale erzeugt ;

eine Folgesteuerschaltung (37), die von der arithmetischen und logischen Einheit (32) ausgesandte Schreib- und Adressiersteuerbefehle und von der Synchronisiervorrichtung (39) ausgesandte Lese- und Adressiersteuerbefehle empfängt ;

ein Schreibregister (38), das die von der arithmetischen und logischen Einheit (32) übertragenen Daten empfängt, die in den Speicher an den angegebenen Adressen einzuschreiben sind.

0 108 689

5. Überlagerungsvorrichtung nach einem beliebigen der Ansprüche 1 bis 4, dadurch gekennzeichnet, daß die Einfügungsmittel (36) enthalten :

einen Multiplexer (40), der das Farbbildsignal (R, V, B) bezüglich der Karte und das Farbbildsignal (R, V, B) bezüglich der synthetischen Daten empfängt ;

einen Detektor (41), der das Farbbildsignal (R, V, B) bezüglich der synthetischen Daten empfängt, dieses Signal erkennt und die Selektionseingänge des Multiplexers (40) in Abhängigkeit von der Erkennung dieses Signals aktiviert ;

einen Wandler (42), um das vom Multiplexer gelieferte digitale Signal in ein analoges Signal umzuwandeln.

6. Überlagerungsvorrichtung nach einem beliebigen der Ansprüche 1 bis 5, dadurch gekennzeichnet, daß die Verarbeitungs- und Steuereinheit (3) einen Rechner (3) kombiniert mit einem Bedienungspult (30) und einem Farbbildsignalgenerator (6) enthält.

7. Vorrichtung zur Überlagerung nach einem beliebigen der Ansprüche 1 bis 6, dadurch gekennzeichnet, daß der Kartenträger (1) von einer zylindrischen Trommel (1) gebildet wird, die sich um ihre Symmetrieachse drehen kann.

Fig.1

Fig.2

Fig.3

Fig.4